# FASCICULE DE BREVET EUROPEEN

(11) **EP 3 411 207 B1**
(45) Date de publication et mention de la délivrance du brevet: **26.02.2020**
(21) Numéro de dépôt: 17704806.3
(22) Date de dépôt: 23.01.2017
(51) Int. Cl.: B29B 11/16, B29B 11/12, B29B 11/04, B29C 43/00, B29C 43/18, B29C 43/20, B29C 51/00, B29C 51/14, B32B 5/26, B32B 5/12, B32B 5/02, B32B 7/02, B32B 37/02, B32B 37/14, B29B 11/06, B29C 70/34, B29C 70/40, B29C 70/68

(54) **PROCÉDÉ DE RÉALISATION DE PRÉFORMES TRIDIMENSIONNELLES PAR FORMAGE DE PRÉFORMES INITIALES AVEC DES VOILES**
VERFAHREN ZUR HERSTELLUNG DREIDIMENSIONALER VORFORMEN AUS AUSGANGSVORMEN MIT DECKLAGEN
METHOD FOR PRODUCING THREE-DIMENSIONAL PREFORMS FROM INITIAL PREFORMS WITH OUTER LAYERS

(30) Priorité: 02.02.2016 FR 1670024
(43) Date de publication de la demande: 12.12.2018
(73) Titulaire: Coriolis Group, 56530 Quéven (FR)
(72) Inventeur: TREIBER, Johannes, 89415 Lauingen (DE)
(86) Numéro de dépôt international: PCT/FR2017/000017
(87) Numéro de publication internationale: WO 2017/134356

(56) Documents cités:
- EP-A1- 0 017 452
- EP-A2- 0 195 562
- WO-A1-2011/085792
- WO-A1-2015/170017
- US-A- 4 478 771
- US-A- 5 037 599
- US-A- 5 156 795
- US-A- 5 854 149
- US-A1- 2002 020 934
- US-A1- 2005 031 720
- US-A1- 2008 136 060

## Description

La présente invention concerne un procédé de réalisation de préformes tridimensionnelles en matériau composite.

Il est connu des procédés de réalisation d'une préforme tridimensionnelle comprenant la réalisation d'une préforme initiale formé de plusieurs plis de fibres superposés, et le formage de la préforme initiale entre l'outillage de formage mâle et l'outillage de formage femelle d'une presse pour obtenir une préforme tridimensionnelle avec sa forme finale souhaitée. La préforme tridimensionnelle est ensuite utilisée pour former une pièce en matériau composite.

La préforme initiale peut être réalisée à partir de fibres unidirectionnelles tissées ou non tissées, pré-imprégnées d'un polymère thermoplastique ou thermodurcissable. Le formage est classiquement effectué à chaud, à une température dite de formage afin d'augmenter la formabilité de la préforme initiale. Lors du formage, plusieurs mécanismes de déformation interviennent, notamment des mécanismes de friction inter-plis, des mécanismes de friction entre la préforme et les outillages, des mécanismes de cisaillement intra-pli, et des mécanismes de flexion.

Suivant la forme de la préforme finale, notamment en cas de préforme de forme complexe, par exemple à double courbure, les fibres ont tendance à se plisser.

Le document EP 0 195 562 décrit un procédé de réalisation d'une préforme tridimensionnelle comprenant la réalisation d'une préforme initiale comprenant plusieurs plis superposés, lesdits plis étant formés à partir de fibres continues unidirectionnelles et d'un premier polymère, et le thermoformage de la préforme initiale entre l'outillage de formage mâle et l'outillage de formage femelle d'une presse pour obtenir une préforme tridimensionnelle. Lors du formage, un film plastique externe est disposé à l'interface entre la préforme initiale et l'outillage mâle et à l'interface entre la préforme initiale et l'outillage femelle, lesdits films externes étant formés à partir d'un deuxième polymère, de sorte que, lors du formage, les films externes restent à l'état solide et se déforment.

Le but de la présente invention est de proposer une solution visant à limiter les défauts dans les préformes tridimensionnelles de formes complexes.

A cet effet, la présente invention propose un procédé de réalisation d'une préforme tridimensionnelle comprenant la réalisation d'une préforme initiale comprenant plusieurs plis superposés, lesdits plis étant formés à partir de fibres continues unidirectionnelles et d'un premier polymère, et le thermoformage de la préforme initiale entre l'outillage de formage mâle et l'outillage de formage femelle d'une presse pour obtenir une préforme tridimensionnelle, caractérisé en ce que lors du formage, un voile externe est disposé à l'interface entre la préforme initiale et l'outillage mâle et à l'interface entre la préforme initiale et l'outillage femelle, lesdits voiles externes étant formés à partir d'un deuxième polymère, différent du premier polymère de sorte que, lors du formage, les voiles externes restent à l'état solide et se déforment, lesdits voiles externes sont des voiles non tissés formés de filaments de deuxième polymère.

Selon l'invention, des voiles sont disposés entre la préforme et les outillages de la presse, la température de la préforme lors du formage, appelée une température de formage, est définie de sorte que les voiles puissent se déformer pour reprendre les efforts de friction entre les voiles et les outillages. Les voiles restent dans un état solide lors du formage, se déforment par allongement ou rupture et permettent un glissement de la préforme dans la presse sans adhérence. Les voiles extérieurs stabilisent les surfaces extérieures de la préforme en limitant, voire supprimant, les déformations locales de la préforme et assurent ainsi une déformation homogène des fibres de la préforme. Les voiles limitent le contact entre le premier polymère et la surface des outillages. Les forces de frottement sec entre les voiles et les outillages s'avèrent moins importantes que les forces de frottement visqueux entre les fibres avec polymère et les outillages.

Le procédé selon l'invention permet ainsi de favoriser les mécanismes de glissement entre les outillages de formage et la préforme, et ainsi de limiter, voire supprimer, les défauts de fibres des plis externes des préformes résultant des frictions entre la préforme et les outillages de formage dans les procédés de formage antérieurs.

La préforme initiale peut être bidimensionnelle, obtenue par drapage sur la surface plane d'un outillage, ou tridimensionnelle, le formage pouvant alors être effectué pour obtenir des pièces tridimensionnelles de forme complexe ne pouvant être obtenues par drapage, notamment par placement de fibres.

Le procédé selon l'invention peut avantageusement être utilisé pour la réalisation de pièce en matériau composite, notamment dans le domaine de l'automobile ou l'aéronautique.

Par ailleurs, les voiles limitent, voire suppriment, le contact direct du premier polymère avec les outillages et donc les problèmes d'adhérence entre la préforme et les outillages, facilitant ainsi le démoulage.

Les voiles peuvent être appliqués sur les plis extérieurs de la préforme initiale après réalisation de cette dernière, de manière automatique ou manuelle, de préférence avec application de chaleur pour garantir le maintien des voiles sur la préforme lors des manipulations ultérieures de la préforme. Selon un autre mode de réalisation, le premier pli est drapé sur un premier voile externe préalablement positionné sur l'outillage de drapage. Après drapage de l'ensemble de plis, un deuxième voile externe est appliqué sur le dernier pli. Selon un autre mode de réalisation, les voiles sont positionnés sur la préforme et/ou sur l'un ou les outillages de la presse. Les fibres continues unidirectionnelles, de préférence appliquées par placement de fibres, sont par exemple des fibres de carbone, des fibres de verre, des fibres synthétiques telles que des fibres d'aramide, des fibres de polyéthylène, et/ou des fibres naturelles, telles que par exemple des fibres de lin.

Le formage est réalisé à chaud, la préforme initiale étant chauffée à une température de formage avant et/ou pendant le formage afin d'augmenter la formabilité de la préforme. La préforme initiale peut être préchauffée avant le formage par passage dans un four ou tunnel et/ou la préforme peut être chauffée lors du formage par chauffage de l'outillage de formage mâle et/ou l'outillage de formage femelle. De préférence, en particulier dans le cas de préformes sèches, la préforme est uniquement préchauffée par passage dans four ou tunnel, les outillages de la presse n'étant pas chauffés, simplifiant ainsi les outillages de presse.

Le deuxième polymère peut être un polymère thermoplastique ou thermodurcissable, de préférence un polymère thermoplastique.

Selon un mode de réalisation, les voiles externes sont formés d'un deuxième polymère thermoplastique, le formage est effectué à une température de formage inférieure à la température de fusion du deuxième polymère, et de préférence inférieure à la température de transition vitreuse du deuxième polymère.

Dans le cas d'un premier polymère thermoplastique, le premier polymère est de préférence dans un état liquide ou liquide visqueux à la température de formage, la température de formage est de préférence supérieure à la température de transition vitreuse du premier polymère, de préférence proche de la température de fusion du premier polymère, par exemple légèrement supérieure à la température de fusion du premier polymère, pour une meilleure formabilité de la préforme, la température de fusion du deuxième polymère étant supérieure à celle du premier polymère. Selon un autre mode de réalisation, suivant la nature du premier polymère, la température de formage est supérieure à la température de transition vitreuse du premier polymère, et inférieure à la température de fusion du premier polymère.

Dans le cas d'un premier polymère thermodurcissable, le premier polymère est de préférence dans un état liquide ou liquide visqueux à la température de formage, la température de formage est de préférence supérieure à la température de transition vitreuse du premier polymère et inférieure à la température de durcissement ou de réticulation du premier polymère.

Selon un autre mode de réalisation, les voiles externes sont formés d'un deuxième polymère thermodurcissable, le formage est effectué à une température de formage, à laquelle le deuxième polymère reste solide, de préférence inférieure à la température de transition vitreuse du deuxième polymère.

Dans le cas de polymère thermoplastique, le premier polymère thermoplastique et/ou le second polymère thermoplastique sont par exemple choisis dans le groupe constitué par les polyamides, polyesters tel que le polyéthylène téréphtalate, polyéthersulfones, polyétheréthercétones, polysulfures de phénylène, polyuréthanes, époxydes, polyoléfines, acide polylactique, ou un mélange d'un ou plusieurs de ces polymères.

Dans le cas de polymère thermodurcissable, le premier polymère thermodurcissable et/ou le deuxième polymère thermodurcissable sont par exemple choisis dans le groupe constitué par les époxydes, polyesters, vinylesters, phénoliques, polyimides, ou bismaléimides, Les voiles externes sont des voiles non tissés formés de filaments de deuxième polymère, orientés de manière aléatoire. La structure non tissée des voiles augmente la perméabilité de la préforme et permet ainsi de favoriser l'infusion et/ou injection, les voiles conférant un effet drainant, plus particulièrement dans le cas d'une infusion. Les voiles peuvent en outre augmenter la tenue au choc de la préforme et/ou améliorer l'aspect de surface de la préforme.

Selon un mode de réalisation, les voiles externes sont des voiles non tissés en polymère thermoplastique.

Selon un mode de réalisation, ledit procédé comprend la réalisation d'une préforme initiale dite sèche, comprenant des fibres munies d'un liant formé du premier polymère, la préforme comprenant moins de 10% en poids de liant, de préférence moins de 5 % en poids de liant, la préforme tridimensionnelle dite sèche obtenue après le thermoformage étant soumise à une opération d'imprégnation d'un polymère d'imprégnation, compatible avec le premier polymère, par injection et/ou infusion, pour former une pièce en matériau composite. Les préformes sèches avec liant comprennent une faible quantité de liant, généralement inférieure à 5 %, permettant de maintenir la cohésion de la préforme, tout en autorisant son imprégnation ultérieure. Les préformes sèches sont obtenues par application de fibres sèches munies d'un liant et/ou par application de fibres sèches, sans liant, et application de liant, par exemple par pulvérisation d'un liant liquide et/ou la projection d'un liant sous forme de poudre, sur la surface d'application et/ou les fibres sèches préalablement drapé.

Selon un autre mode de réalisation, la préforme initiale est réalisée à partir de fibres pré-imprégnées d'un premier polymère thermoplastique ou thermodurcissable, en une quantité suffisante pour former la matrice de la pièce composite finale, le procédé comprenant la réalisation d'une préforme initiale pré-imprégnée comprenant au moins 30% en poids de premier polymère, de préférence au moins 40% en poids, le premier polymère constituant la matrice de la pièce en matériau composite obtenue à partir de la préforme tridimensionnelle, après une éventuelle opération de consolidation ou cuisson.

Selon un mode de réalisation, les voiles externes présentent une masse surfacique de 4 à 100 g/m².

Selon un mode de réalisation, les voiles externes présentent une masse surfacique de 4 à 35 g/m², de préférence d'au moins 10 g/m².

Selon un mode de réalisation, les voiles sont des voiles polyamide (PA), en particulier copolyamide.

Selon un mode de réalisation, le formage est réalisé à une température de formage à laquelle le premier polymère est à l'état liquide ou liquide visqueux, la température de formage étant supérieure à la température de transition vitreuse du premier polymère.

Selon un mode de réalisation, ladite préforme initiale comprend au moins un voile interne intercalé entre deux plis de la préforme initiale, ledit voile interne étant formé à partir d'un troisième polymère, ledit troisième polymère étant de préférence à l'état solide lors du formage de manière à favoriser les mécanismes de glissement entre les deux plis. Les voiles internes limitent les contacts entre les deux plis, et donc le collage des deux plis par le premier polymère. De tels voiles internes permettent ainsi d'augmenter la formabilité de la préforme. Le troisième polymère est un polymère thermoplastique ou thermodurcissable, la température de formage étant inférieure à la température de transition vitreuse du troisième polymère.

Par ailleurs, dans le cas de préformes sèches, les voiles internes augmentent la perméabilité de la préforme et favorisent l'opération d'infusion et/ou injection,

Selon un mode de réalisation, la préforme initiale est réalisé par le procédé dit de placement de fibres 12, la réalisation de la préforme initiale comprend la réalisation de plis superposés dans des orientations définies, par application au contact, au moyen d'un rouleau d'application ou de compactage, de fibres continues unidirectionnelles sur un outillage de drapage, chaque pli étant réalisé par application d'une ou plusieurs bandes selon une orientation sur l'outillage de drapage ou sur des bandes du pli précédent, chaque bande étant formée d'une ou plusieurs fibres. Le placement de fibres est avantageusement automatisé au moyen d'une tête de placement de fibres, connue en soi, comportant un rouleau de compactage destiné à venir en contact contre l'outillage pour appliquer une bande formée d'une ou plusieurs fibres plates continues, et un système de guidage pour guider la ou les fibres sur ledit rouleau, par déplacement relatif de la tête d'application par rapport à la surface de drapage selon différentes trajectoires.

Lesdites fibres continues unidirectionnelles se présentent de préférence sous la forme de fibres continues unidirectionnelles plates, classiquement appelées mèches, comprenant une multitude de filaments. Les fibres présentent par exemple des largeurs d'un huitième de pouce, un quart de pouce ou un demi-pouce (1/8", 1/4" ou 1/2"). Dans la présente, le terme «fibres » désigne également des fibres de plus grande largeur, supérieure à 1/2 pouce, classiquement appelée bande dans la technologie du placement. Les fibres déposées peuvent être des fibres sèches munies d'un liant, ou des fibres pré-imprégnées de polymère thermodurcissable ou thermoplastique.

Selon d'autres modes de réalisation, les plis de la préforme sont obtenus par superposition de tissus.

L'invention sera mieux comprise, et d'autres buts, détails, caractéristiques et avantages apparaîtront plus clairement au cours de la description explicative détaillée qui va suivre de modes de réalisation particuliers actuellement préférés de l'invention, en référence aux dessins schématiques annexés, sur lesquels :
- la figure 1 est une vue schématique en coupe d'un exemple de préforme tridimensionnelle réalisée selon le procédé selon l'invention ;
- la figure 2 est une vue schématique de côté illustrant l'opération de drapage de la préforme initiale ;
- la figure 3 est une vue schématique de côté illustrant l'application de voiles externes sur la préforme initiale ;
- les figures 4 et 5 sont des vues schématiques en coupe de la presse illustrant l'opération de formage de la préforme initiale de la figure 3 ; et,
- la figure 6 est une vue schématique de l'empilement de plis de d'une préforme initiale selon un deuxième mode de réalisation, munie de deux voiles externes, ainsi que de deux voiles internes.

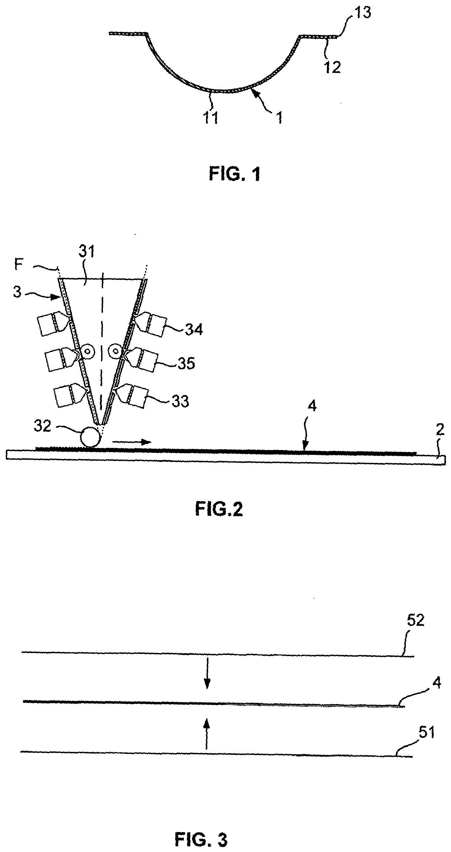

La figure 1 illustre un exemple de préforme tridimensionnelle 1 réalisable selon le procédé selon l'invention, par drapage de fibres continues et formage. La préforme présente la forme d'une calotte sphérique 11 avec un rebord annulaire 12.

Les figures 2 à 5 illustrent les étapes du procédé de réalisation de cette préforme tridimensionnelle 1.

Dans une première étape, tel qu'illustré à la figure 2, des plis de fibres unidirectionnelles continues sont drapés à plat sur un outillage de drapage 2 dans des différentes orientations, pour former une plaque ou une préforme initiale 4 bidimensionnelle.

Le drapage est effectué au moyen d'une tête 3 de placement de fibres, connue en soi, permettant le drapage automatique au contact de bandes formées d'une ou plusieurs fibres. Les fibres F entrent dans la tête 3 sous la forme de deux nappes de fibres, et la tête comprend un système de guidage 31 permettant de guider les fibres vers le rouleau de compactage 32 sous la forme d'une bande de fibres dans laquelle les fibres sont disposées côte à côte, par exemple sensiblement bord à bord. La tête comprend, de part et d'autre du système de guidage, des moyens de coupe 33 pour couper individuellement chaque fibre passant dans le système de guidage, des moyens de blocage 34 pour bloquer chaque fibre venant d'être coupée, et des moyens de réacheminement 35 pour entraîner individuellement chaque fibre, ceci afin de pouvoir à tout moment stopper et reprendre l'application d'une fibre, ainsi que choisir la largeur de la bande. Le drapage d'une bande est réalisé par déplacement relatif de la tête par rapport à la surface de drapage sensiblement plane de l'outillage de drapage. La tête comprend par exemple une structure support (non représentée) sur laquelle est monté le système de guidage et par laquelle la tête peut être assemblée à un système de déplacement, apte à déplacer la tête selon au moins deux directions perpendiculaires l'une à l'autre. La tête est par exemple prévue pour recevoir huit fibres, et permettre l'application de bandes de 1 à 8 fibres de 6,35 mm (1/4 de pouce) de large.

A titre d'exemple, la tête est utilisée pour la réalisation d'une préforme sèche, à partir de fibres sèches munies d'un liant classiquement appelé « binder », pour conférer un caractère collant aux fibres lors du drapage et assurer la cohésion de la préforme. Le liant est constitué d'un premier polymère sous forme de poudre et/ou d'un ou plusieurs voiles. Les fibres sont par exemple par exemple des fibres de carbone, plates continues, de type mèches, comprenant une multitude de fils ou filaments de carbone, avec un liant thermoplastique sous forme de poudre, présent en quantité de l'ordre de 2% en poids. La préforme initiale 4 est par exemple réalisée en drapant sept plis de fibres dans des orientations différentes, selon l'empilement suivant : +45° /-45° /0° /90° /0° /-45° / +45°.

La tête 3 est équipée d'un système de chauffage (non représenté), par exemple de type lampe IR ou laser, afin de chauffer le liant en cours d'application des fibres, et ainsi permettre au moins une adhésion des fibres des différents plis et assurer la cohésion de l'ensemble de plis de la préforme pour son transfert ultérieur et son formage. Le système de chauffage chauffe les fibres avant leur application sur la surface d'application, ainsi que la surface d'application ou les fibres préalablement déposées, en amont du rouleau par rapport à la direction d'avancement de la tête.

Après réalisation de la préforme initiale, des voiles externes 51, 52 sont appliqués sur les deux surfaces de la préforme initiale, tel qu'illustré schématiquement à la figure 3. Les voiles externes sont ici de type non-tissés, formés de filaments en un deuxième polymère thermoplastique, présentant un point de fusion supérieur au point de fusion du premier polymère thermoplastique constituant le liant de la préforme.

Les voiles peuvent être appliqués de manière automatique, semi-automatique ou manuelle. Pour garantir le maintien des voiles sur la préforme, les voiles sont par exemple posés sur les plis extérieurs de la préforme qui forment les deux surfaces principales de la préforme, puis pressés contre la préforme en chauffant afin d'au moins ramollir le liant de la préforme et coller un premier voile externe 51 sur le premier pli à 45 ° de la préforme et un second voile externe 52 sur le dernier pli à 45° de la préforme. De préférence, le chauffage est effectué à une température inférieure au point de fusion du deuxième polymère, de préférence inférieure à sa température de transition vitreuse. La structure non-tissée des voiles assurent une bonne liaison des voiles à la préformes, le premier polymère venant entre les filaments des voiles.

La préforme initiale munie des voiles externes est ensuite transférée vers une presse pour l'opération de formage, également appelée opération d'emboutissage.

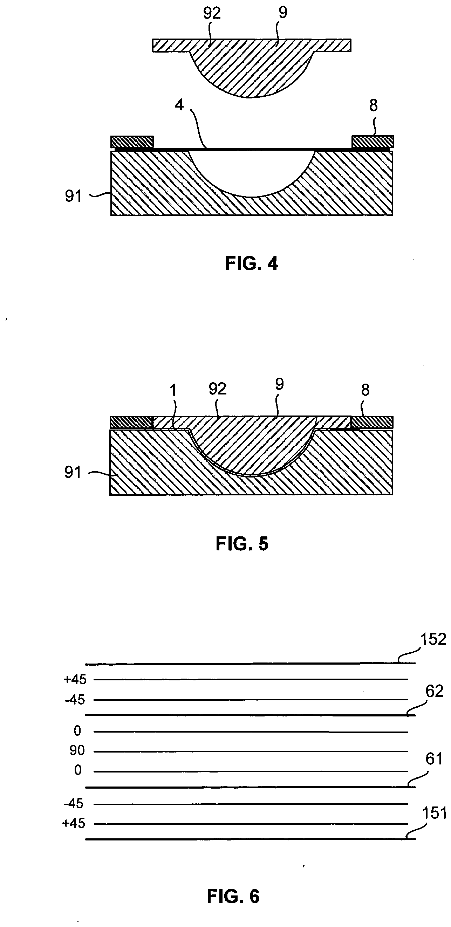

Tel qu'illustré à la figure 4, la presse 9 comprend un outillage de formage femelle 91 ou matrice, présentant un renfoncement dont la forme correspondant à celle de la calotte sphérique 12 de la préforme à réaliser, et un outillage de formage mâle 92, ou poinçon, comprenant un bossage de forme complémentaire. Le formage est réalisé par rapprochement relatif de l'outillage de formage mâle et de l'outillage de formage femelle, d'une position ouverte de la presse illustrée à la figure 4 vers une position fermée de la presse illustrée à la figure 5.

Le formage est réalisé à chaud, la préforme étant à une température de formage supérieure ou égale à la température de fusion du premier polymère et inférieure à la température de fusion des voiles, de sorte que les voiles restent à l'état solide lors du formage. Lors du formage, les voiles externes se déforment par allongement ou déchirement. Les voiles collés aux plis extérieurs de la préforme stabilisent lesdits plis, les voiles distribuant les efforts de frottement et limitant les déformations locales des fibres desdits plis. Cette température de formage de la préforme est obtenue par préchauffage de la préforme avant positionnement dans la presse et/ou par chauffage des deux outillages 91, 92. Ce préchauffage est par exemple réalisé par passage de la préforme initiale entre les rampes de lampe infrarouge supérieure et inférieure d'un four ou tunnel de préchauffage. De préférence, lors du formage, la préforme est maintenue sous tension par un système de mise sous tension, par exemple de type serre-flan, tel que représenté de manière schématique sous la référence 8.

A titre d'exemple, le premier polymère de la préforme est formé d'un polymère epoxy thermoplastique ayant un point de fusion de l'ordre de 130°C. Les voiles externes sont chacun formés d'un voile thermoplastique non-tissé en copolyamide, ayant une masse surfacique de 12 g/m², et un point de fusion d'environ 180°C, tel que commercialisé par la société Spunfab ou la société Protechnic. Les voiles sont appliqués sur la préforme initiale à une température de 140°C, et le formage est effectué à une température de 140°C.

Les outillages 91, 92 sont ensuite écartés l'un de l'autre en position ouverte pour pouvoir démouler la préforme tridimensionnelle de la presse, les voiles externes facilitant cette opération de démoulage.

La préforme tridimensionnelle résultante est ensuite soumise à une opération d'ajout d'un polymère d'imprégnation, thermodurcissable ou thermoplastique, par un procédé d'injection et/ou infusion, puis à une opération de détourage, pour former une pièce en matériau composite.

Selon une autre variante de réalisation, la préforme initiale est réalisée à partir de fibres préimprégnées d'une résine thermoplastique. Les fibres sont par exemple par exemple des fibres de carbone, plates continues, de type mèches, comprenant une multitude de fils ou filaments de carbone, avec un polymère thermoplastique, présente en quantité de l'ordre de 40% en poids, ce polymère constituant la matrice de la pièce finale.

La figure 6 illustre une préforme initiale selon un autre mode de réalisation, qui se différencie principalement de la préforme précédente par le fait que des voiles internes sont positionnés entre les plis à 0° et -45°. La préforme comprend comme précédemment un empilement de sept plis à 45°/-45°/0°/90°/0°/-45°/+45°, formés à partir de fibres sèches munies d'un liant ou premier polymère thermoplastique.

Un premier voile externe non tissé 151 thermoplastique est appliqué sur la surface de drapage de l'outillage de drapage, et le premier pli orienté à 40° de la préforme est drapé directement par placement de fibres sur ce premier voile externe. Après drapage du second pli à -45°, un premier voile interne 61 non tissé, formé d'un troisième polymère thermoplastique, est positionné sur ce deuxième pli. Les troisième, quatrième et cinquième plis suivants, orientés respectivement à 0°, 90° et 0° sont drapés, et un second voile interne 62 non-tissé, identique au premier voile interne, est positionné sur le cinquième pli. Les sixième et septième plis à -45° et +45° sont drapés, et un deuxième voile externe 152 non tissé thermoplastique est positionné sur le dernier pli.

Lors du formage, la température de la préforme est portée à une température supérieure au point de fusion du premier polymère, et inférieure au point de fusion du deuxième polymère et du troisième polymère. A titre d'exemple, les voiles externes sont comme précédemment des voiles non tissés en copolyamide, ayant un point de fusion de 180°C, et une masse surfacique de 12 g/m², et les voiles internes sont également des voiles non-tissés en copolyamide, ayant un point de fusion de 180°C et une masse surfacique de 15 g/m².

Le formage est réalisé à une température de 150°C, de sorte que les voiles internes et les voiles externes restent dans un état solide. Les voiles internes favorisent le glissement entre les plis à 0° et 45°, tandis que les voiles externes favorisent le glissement sur les outillages de formage. Après formage, la préforme tridimensionnelle est soumise à une opération d'infusion ou d'injection d'un polymère d'imprégnation, les voiles internes maintenant les plis écartés et favorisant ainsi l'infusion ou injection.

Bien que l'invention ait été décrite en liaison avec différents modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention.

## Revendications

1. Procédé de réalisation d'une préforme (1) tridimensionnelle comprenant
- la réalisation d'une préforme initiale (4) comprenant plusieurs plis superposés, lesdits plis étant formés à partir de fibres continues unidirectionnelles et d'un premier polymère, et
- le thermoformage de la préforme initiale entre l'outillage de formage mâle (92) et l'outillage de formage femelle (91) d'une presse (9) pour obtenir une préforme tridimensionnelle (1),
et dans lequel lors du formage, un voile externe (51, 52 ; 151, 152) est disposé à l'interface entre la préforme initiale (4) et l'outillage mâle (92) et à l'interface entre la préforme initiale et l'outillage femelle (91), lesdits voiles externes étant formés à partir d'un deuxième polymère, de sorte que, lors du formage, les voiles externes restent à l'état solide et se déforment, lesdits voiles externes sont des voiles non tissés formés de filaments de deuxième polymère.

2. Procédé selon la revendication 1, **caractérisé en ce que** les voiles externes (51, 52; 151, 152) sont formés d'un deuxième polymère thermoplastique, le formage est effectué à une température de formage inférieure à la température de fusion du deuxième polymère.

3. Procédé selon la revendication 2, **caractérisé en ce que** les voiles externes sont des voiles polyamide.

4. Procédé selon la revendication 1, **caractérisé en ce que** les voiles externes (51, 52 ; 151, 152) sont formés d'un deuxième polymère thermodurcissable, le formage est effectué à une température de formage, à laquelle le deuxième polymère reste solide.

5. Procédé selon l'une des revendications 1 à 4, **caractérisé en ce qu'**il comprend la réalisation d'une préforme initiale (4) sèche comprenant des fibres munies d'un liant formé du premier polymère, la préforme tridimensionnelle sèche obtenue après le thermoformage étant soumise à une opération d'imprégnation d'un polymère d'imprégnation, par injection et/ou infusion, pour former une pièce en matériau composite.

6. Procédé selon l'une des revendications 1 à 5, **caractérisé en ce qu'**il comprend la réalisation d'une préforme initiale pré-imprégnée comprenant au moins 30% en poids de premier polymère, le premier polymère constituant la matrice de la pièce en matériau composite obtenue à partir de la préforme tridimensionnelle.

7. Procédé selon l'une des revendications 1 à 6, **caractérisé en ce que** les voiles externes (51, 52 ; 151, 152) présentent une masse surfacique de 4 à 35 g/m².

8. Procédé selon l'une des revendications 1 à 7, **caractérisé en ce que** le formage est réalisé à une température de formage à laquelle le premier polymère est à l'état liquide ou liquide visqueux.

9. Procédé selon l'une des revendications 1 à 8, **caractérisé en ce que** ladite préforme initiale comprend au moins un voile interne (61, 62) intercalé entre deux plis de la préforme initiale, ledit voile interne étant formé à partir d'un troisième polymère, ledit troisième polymère étant à l'état solide lors du formage.

10. Procédé selon l'une des revendications 1 à 9, **caractérisé en ce que** la réalisation de la préforme initiale (4) comprend la réalisation de plis superposés, par application au contact, au moyen d'un rouleau d'application (32), de fibres continues unidirectionnelles sur un outillage de drapage (2), chaque pli étant réalisé par application d'une ou plusieurs bandes selon une orientation sur l'outillage de drapage ou sur des bandes du pli précédent, chaque bande étant formée d'une ou plusieurs fibres.

11. Procédé selon l'une des revendications 1 à 10, **caractérisé en ce que** la préforme initiale est préchauffée avant le formage.

## Patentansprüche

1. Verfahren zum Herstellen einer dreidimensionalen Vorform (1) umfassend
- das Herstellen einer ursprünglichen Vorform (4), mehrere überlagerte Faltungen umfassend, wobei die Faltungen aus durchgehenden unidirektionalen Fasern und einem ersten Polymer gebildet werden, und
- das Warmformen der ursprünglichen Vorform zwischen dem männlichen Formwerkzeug (92) und dem weiblichen Formwerkzeug (91) einer Presse (9) um eine dreidimensionale Vorform (1) zu erhalten,
und wobei beim Formen ein äußeres Netz (51, 52; 151, 152) an der Schnittstelle zwischen der ursprünglichen Vorform (4) und dem männlichen Formwerkzeug (92) und an der Schnittstelle zwischen der ursprünglichen Vorform und dem weiblichen Formwerkzeug (91) angeordnet wird, wobei die äußeren Netze aus einem zweiten Polymer gebildet sind, sodass die äußeren Netze beim Formen im festen Zustand verbleiben und sich verformen, die äußeren Netze Vliesnetze sind, die aus Filamenten eines zweiten Polymers gebildet werden.

2. Verfahren nach Anspruch 1, **dadurch gekennzeichnet, dass** die äußeren Netze (51, 52; 151, 152) aus einem zweiten thermoplastischen Polymer gebildet werden, wobei das Formen bei einer Formtemperatur durchgeführt wird, die niedriger als die Schmelztemperatur des zweiten Polymers ist.

3. Verfahren nach Anspruch 2, **dadurch gekennzeichnet, dass** die äußeren Netze Polyamidnetze sind.

4. Verfahren nach Anspruch 1, **dadurch gekennzeichnet, dass** die äußeren Netze (51, 52; 151, 152) aus einem zweiten wärmehärtenden Polymer gebildet werden, wobei das Formen bei einer Formtemperatur durchgeführt wird, bei der das zweite Polymer fest verbleibt.

5. Verfahren nach einem der Ansprüche 1 bis 4, **dadurch gekennzeichnet, dass** es das Herstellen einer trockenen ursprünglichen Vorform (4) umfasst, die Fasern umfasst, die mit einem Bindemittel versehen sind, das aus dem ersten Polymer gebildet wird, wobei die nach dem Warmformen erhaltene trockene dreidimensionale Vorform einem Imprägnierungsvorgang mit einem Imprägnierungspolymer durch Injektion und/oder Infusion unterzogen wird, um ein Teil aus Verbundmaterial zu formen.

6. Verfahren nach einem der Ansprüche 1 bis 5, **dadurch gekennzeichnet, dass** es das Herstellen einer vorimprägnierten ursprünglichen Vorform umfasst, die mindestens 30 Gew.-% an erstem Polymer umfasst, wobei das erste Polymer die Matrix des Teils aus Verbundmaterial darstellt, das aus der dreidimensionalen Vorform erhalten wird.

7. Verfahren nach einem der Ansprüche 1 bis 6, **dadurch gekennzeichnet, dass** die äußeren Netze (51, 52; 151, 152) ein Oberflächengewicht von 4 bis 35 g/m² vorweisen.

8. Verfahren nach einem der Ansprüche 1 bis 7, **dadurch gekennzeichnet, dass** das Formen bei einer Formtemperatur ausgeführt wird, bei der das erste Polymer im flüssigen oder zähflüssigen Zustand ist.

9. Verfahren nach einem der Ansprüche 1 bis 8, **dadurch gekennzeichnet, dass** die ursprüngliche Vorform mindestens ein inneres Netz (61, 62) umfasst, das zwischen zwei Faltungen der ursprünglichen Vorform eingesetzt ist, wobei das innere Netz aus einem dritten Polymer gebildet ist, wobei das dritte Polymer beim Formen im festen Zustand ist.

10. Verfahren nach einem der Ansprüche 1 bis 9, **dadurch gekennzeichnet, dass** das Herstellen der ursprünglichen Vorform (4) das Herstellen von überlagerten Faltungen durch Kontaktauftrag anhand einer Auftragsrolle (32) von durchgehenden unidirektionalen Fasern auf einem Drapierwerkzeug (2) umfasst, wobei jede Faltung durch Auftragen eines oder mehrerer Bänder gemäß einer Ausrichtung auf dem Drapierwerkzeug oder auf Bändern der vorherigen Faltung hergestellt wird, wobei jedes Band aus einer oder mehreren Fasern gebildet wird.

11. Verfahren nach einem der Ansprüche 1 bis 10, **dadurch gekennzeichnet, dass** die ursprüngliche Vorform vor dem Formen vorgewärmt wird.

## Claims

1. Method for producing a three-dimensional preform (1) comprising
- producing an initial preform (4) comprising a plurality of superposed plies, said plies being formed from unidirectional continuous fibres and a first polymer, and
- thermoforming the initial preform between the male forming tool (92) and the female forming tool (91) of a press (9) to obtain a three-dimensional preform (1),
and wherein during forming, an outer web (51, 52; 151, 152) is positioned at the interface between the initial preform (4) and the male tooling (92) and at the interface between the initial preform and the female tooling (91), said outer webs being formed from a second polymer such that, during forming, the outer webs remain in the solid state and are deformed, said outer webs are nonwoven webs formed from filaments of the second polymer.

2. Method according to claim 1, **characterized in that** the outer webs (51, 52; 151, 152) are formed of a second thermoplastic polymer, the forming is carried out at a forming temperature which is lower than the melting temperature of the second polymer.

3. Method according to claim 2, **characterized in that** the outer webs are polyamide webs.

4. Method according to claim 1, **characterized in that** the outer webs (51, 52; 151, 152) are formed from a second thermosetting polymer, the forming is carried out at a forming temperature at which the second polymer remains solid.

5. Method according to one of claims 1 to 4, **characterized in that** it comprises the production of a dry initial preform (4) comprising fibres provided with a binder formed of the first polymer, the dry three-dimensional preform obtained after thermoforming being subjected to an operation of impregnation with an impregnating polymer, by injection and/or infusion, in order to form a composite material part.

6. Method according to one of claims 1 to 5, **characterized in that** it comprises the production of a preimpregnated initial preform comprising at least 30% by weight of first polymer, the first polymer constituting the matrix of the composite material part obtained from the three-dimensional preform.

7. Method according to one of claims 1 to 6, **characterized in that** the outer webs (51, 52; 151, 152) have a surface mass of 4 to 35 g/m².

8. Method according to one of claims 1 to 7, **characterized in that** the forming is carried out at a forming temperature at which the first polymer is in the liquid or viscous liquid state.

9. Method according to one of claims 1 to 8, **characterized in that** the said initial preform comprises at least one internal web (61, 62) interposed between two plies of the initial preform, the said internal web being formed from a third polymer, the said third polymer being in the solid state during forming.

10. Method according to one of claims 1 to 9, **characterized in that** the production of the initial preform (4) comprises the production of superimposed plies by the contact application, by means of an application roller (32), of unidirectional continuous fibres onto a layup tool (2), each ply being produced by applying one or more strips in an orientation onto the layup tool or onto strips of the preceding ply, each strip being formed from one or more fibres.

11. Method according to one of claims 1 to 10, **characterized in that** the initial preform is preheated before forming.
